Europäisches Patentamt

European Patent Office

Office européen des brevets

(19)

(11) **EP 0 733 930 A2**

(12) **DEMANDE DE BREVET EUROPEEN**

(43) Date de publication:
25.09.1996 Bulletin 1996/39

(51) Int. Cl.⁶: **G02F 1/1339**

(21) Numéro de dépôt: 96104403.9

(22) Date de dépôt: 20.03.1996

(84) Etats contractants désignés:
CH DE ES FR GB IT LI

(30) Priorité: 24.03.1995 FR 9503477

(71) Demandeur: ASULAB S.A.
CH-2501 Bienne (CH)

(72) Inventeurs:
• Grupp, Joachim
2003 Neuchâtel (CH)

• Lemarié, Bernard
07500 Guilherand-Granges-les-Valences (FR)

(74) Mandataire: Patry, Didier Marcel Pierre et al
I C B,
Ingénieurs Conseils en Brevets S.A.
Rue des Sors 7
2074 Marin (CH)

(54) **Cellule électrique**

(57)    L'invention concerne une cellule électrique du type comprenant un premier et un deuxième substrats parallèles flexibles, écartés l'un de l'autre, portant des électrodes sur leurs faces en regard, ces substrats enfermant entre eux une couche de matière sensible qui peut changer de propriété physique, notamment optique, sous l'effet d'une tension appliquée aux électrodes, ou changer de propriétés électriques sous l'effet d'une contrainte ou d'un rayonnement traversant l'un de celui-ci, ladite matière sensible étant protégée du contact de l'atmosphère par un cadre de scellement reliant entre eux, de façon étanche, caractérisée en ce qu'au moins le premier substrat comprend sur sa face en regard du deuxième substrat au moins une première rainure périphérique continue dans laquelle pénètre au moins une partie dudit cadre de scellement.

Fig.1

## Description

La présente invention concerne une cellule électrique du type comprenant deux lames ou substrats parallèles réunis par un cadre de scellement, et plus particulièrement une telle cellule ayant des substrats flexibles en verre ou en plastique.

De telles cellules électriques sont utilisées notamment pour réaliser des dispositifs d'affichage à cristaux liquides et des cellules de production d'énergie à partir du rayonnement solaire.

Dans le cas d'une cellule d'affichage à cristaux liquides, un film de cristaux liquides est intercalé entre deux lames, généralement en verre mince, et des électrodes sont disposées sur la face de chacun des substrats située en regard de l'autre substrat. Ces lames sont réunies l'une à l'autre par un cadre de scellement disposé à la périphérie de ces dernières. Ce cadre de scellement, formé par une ligne de colle ayant une largeur de l'ordre de 0,5 mm, assure la cohésion des lames de la cellule et leur écartement (de l'ordre de 5 à 10 μm), définit une chambre étanche dans laquelle le film de cristaux liquides est emprisonné, et assure une isolation électrique convenable entre les électrodes des deux lames. Le faible écartement mentionné ci-dessus est indispensable à un fonctionnement dynamique performant de la cellule en ce sens que l'écartement entre les deux substrats détermine le volume du film de cristaux liquides et par là même les caractéristiques de transmission de la lumière, la vitesse de commutation ainsi que la tension de fonctionnement de la cellule. Cet écartement doit être notamment maintenu aussi faible que possible pour obtenir une cellule ayant une vitesse de commutation élevée avec une faible tension de fonctionnement et une transmission élevée.

Certaines applications de ces cellules, par exemple pour des visières à transmission variable pour casques, nécessitent l'utilisation de cellules comprenant des lames ou substrats flexibles. Ces substrats flexibles sont généralement formés de lames en matière plastique, par exemple en polycarbonate, de faible épaisseur, c'est-à-dire ayant des épaisseurs comprises entre 1 et 1,5 mm.

De telles cellules présentent plusieurs problèmes tant à l'utilisation qu'à la fabrication.

En effet, on a constaté qu'il apparaissait fréquemment un décollement des substrats qui tendait à séparer les substrats l'un de l'autre , notamment dans les zones de coins de la cellule, ce décollement conduisant à une dégradation irrémédiable de la cellule. Un tel phénomène apparaît par exemple lorsque le cadre de scellement est soumis à des contraintes mécaniques importantes par exemple au cours de l'opération de séparation des cellules unitaires fabriquées en lot par découpage mécanique des plaques formant les substrats, lorsque la cellule est pressée mécaniquement pour réaliser un contact électrique avec des moyens de contact ou encore lors du collage sur la cellule d'un polariseur par laminage. On explique ce décollement par la conjugaison de la faible surface de contact de la colle avec les substrats, et de la flexibilité des substrats, cette flexibilité induisant des contraintes mécaniques supplémentaires sur le cadre de scellement par rapport à une cellule "rigide".

Une solution à ce problème de décollement pourrait consister à augmenter la largeur du cadre de scellement pour obtenir une résistance satisfaisante de celui-ci au décollement. Toutefois, des essais ont montré qu'il est nécessaire de multiplier au moins par 20 la largeur du cadre de scellement (qui est normalement de l'ordre de 1,5 mm) pour obtenir une résistance au décollement satisfaisante. Une telle solution est bien entendu inacceptable en ce qu'elle conduit à une réduction importante de la surface active de la cellule par rapport à sa surface totale.

On connaît par ailleurs du document JP 5 072 540 un dispositif d'affichage à cristaux liquides comprenant deux substrats reliés entre eux par un cadre de scellement ayant une structure améliorant la résistance au décollement des substrats. Selon ce document, un filtre coloré en un matériau organique est appliqué entre un substrat et le cadre de scellement, le matériau du filtre coloré comprenant des parties en erreur dans lesquelles pénètrent le cadre de scellement de sorte que la surface de contact entre le cadre de scellement et le substrat peut être augmenté. Toutefois, comme le volume du cadre de scellement reste quasiment constant, l'augmentation de cohésion n'est pas améliorée si bien qu'il subsiste un risque important de rupture de la cohésion de la matière du cadre de scellement notamment dans le cadre des applications mentionnées ci-dessus.

Le document JP 4 020 929 décrit une solution alternative à celle présentée dans le document JP 5 072 540. Selon ce document, des creux et des saillies ayant une profondeur de 1 μm sont formés selon un cadre à la surface périphérique extérieure d'un premier substrat. La matière destinée à former le cadre de scellement est déposée sur le premier substrat dans la région des creux et des saillies. Un deuxième substrat est formé de la même manière et est superposé au premier substrat de sorte que les parties en creux du premier substrat viennent en regard des parties en saillies du deuxième substrat après quoi on applique une pression sur le deuxième substrat, la distance entre les deux substrats étant maintenue constante à l'aide d'espaceur en forme de bille ayant un diamètre de 6 mm. Compte tenu de la faible profondeur des creux ménagés dans les substrats, l'enseignement de ce document ne consiste qu'à augmenter la surface de la matière formant le cadre de scellement en contact avec les substrats sans suggérer une augmentation de volume de matière formant le cadre de scellement. En conséquence, la cohésion du cadre de scellement n'a pas augmenté selon cette construction et présente les mêmes inconvénients que la cellule décrite dans le document JP 5 072 540.

Le document JP 61 057 927 décrit une cellule d'affichage à cristaux liquides comprenant deux substrats réunis au moyen d'un cadre de scellement. Selon ce document, la cohésion entre les deux substrats est renforcée en étendant le matériau formant le cadre de scellement dans des trous traversant prévus à intervalles réguliers dans l'un ou les deux substrats. Cela présente l'inconvénient majeur de ne renforcer la cohésion que de façon locale, laissant la cellule avec des zones de cohésion fragiles entre les trous. Par ailleurs, la préparation des substrats comportant des trous présente des inconvénients notamment lors du dépôt des différentes couches nécessaires à la fabrication des cellules.

Une autre solution pourrait consister à augmenter l'épaisseur du cadre de scellement, toutefois cela conduirait à une augmentation correspondante de l'écartement entre les substrats avec les conséquences évoquées plus haut.

Un autre problème, apparaissant à la fabrication de ce type de cellule, réside dans la difficulté de maîtriser l'épaisseur de la ligne de colle qui forme le cadre de scellement au moment de son dépôt, avant l'assemblage des substrats. Une variation d'écartement des substrats de 0,1 μm environ engendre un défaut visible à l'oeil nu à la surface de la cellule, notamment à proximité du cadre de scellement. La non maîtrise de l'épaisseur du cadre de scellement est donc préjudiciable à la qualité de l'affichage de la cellule.

Les cellules électriques à substrats flexibles présentent donc d'importants problèmes de fiabilité qu'il convient de réduire, voire d'éliminer.

L'invention a donc pour but principal de remédier aux inconvénients susmentionnés de l'art antérieur en fournissant une cellule électrique du type comprenant deux lames ou substrats réunis par un cadre de scellement qui est simple et économique à assembler et dans laquelle le risque de dégradation par décollement des substrats lorsque la cellule est soumise à des contraintes d'utilisation normales est considérablement réduit ou supprimé, ces buts étant atteints sans altérer les performances de fonctionnement de la cellule, notamment sans augmenter l'écartement entre les substrats et sans diminuer la surface active de la cellule.

A cet effet, l'invention a donc pour objet une cellule électrique du type comprenant un premier et un deuxième substrats parallèles flexibles, écartés l'un de l'autre d'un écartement déterminé, portant des électrodes sur leurs faces en regard, ces substrats enfermant entre eux une couche de matière sensible qui peut changer de propriété physique, notamment optique, sous l'effet d'une tension appliquée aux électrodes, ou changer de propriété électrique sous l'effet d'une contrainte ou d'un rayonnement traversant l'un des substrats, ladite matière sensible étant protégée du contact de l'atmosphère par un cadre de scellement reliant entre elles, de façon étanche, les parties périphériques desdits substrats, ledit cadre de scellement ayant une largeur dans le plan des substrats, caractérisée en ce qu'au moins le premier substrat comprend sur sa face en regard du deuxième substrat au moins une première rainure périphérique continue dans laquelle s'étend au moins une partie dudit cadre de scellement, la section transversale du cadre de scellement étant un multiple d'une aire égale au produit de ladite largeur par ledit écartement, l'épaisseur du cadre de scellement en n'importe quel point étant supérieure ou égale audit écartement.

Grâce à ces caractéristiques, on augmente de façon importante non seulement la surface des substrats en contact avec la colle, et donc la résistance au décollement des substrats sans augmenter ni la largeur du cadre de scellement ni l'écartement entre les substrats, mais aussi le volume de colle se trouvant entre les deux substrats et ceci sur le totalité de la périphérie de la cellule. Ceci contribue également à la diminution des risques de fuite de la matière active. La structure de la cellule selon l'invention supprime également de façon avantageuse la nécessité du contrôle délicat du dépôt d'un très faible volume colle pour former le cadre de scellement comme cela était le cas dans l'art antérieur puisque désormais le volume de colle déposée dans le fond de la ou des rainures est plus important et présente un volume d'expansion important avant de pénétrer dans la zone active de la cellule.

Selon une caractéristique avantageuse de l'invention, la cellule comprend dans la zone intérieure délimitée par le cadre de scellement et entre les substrats des entretoises déterminant l'écartement des substrats.

Ainsi, l'écartement précis des substrats est assuré par la dimension des entretoises qui peuvent avoir la forme de billes ou de fibres.

D'autres avantages et caractéristiques de l'invention apparaîtront à la lecture de la description détaillée suivante d'exemples de réalisation donnés à titre illustratif et non limitatif en liaison avec le dessin annexé dans lequel :

-   les figures 1 à 7 sont des coupes partielles de différents modes et variantes de réalisation d'une cellule électrique conforme à l'invention, et
-   la figure 8 est une vue de dessus d'un des substrats de la cellule représentée à la figure 2.

La description détaillée de l'invention qui va suivre va être faite dans le cadre d'une application à une cellule électrique de type à affichage à cristaux liquides, mais il est bien entendu que l'invention n'est aucunement limitée à cette application et que les principes de l'invention sont notamment applicables à d'autres types de cellule électrique telle que par exemple à des cellules électriques pour la production d'énergie électrique à partir du rayonnement solaire.

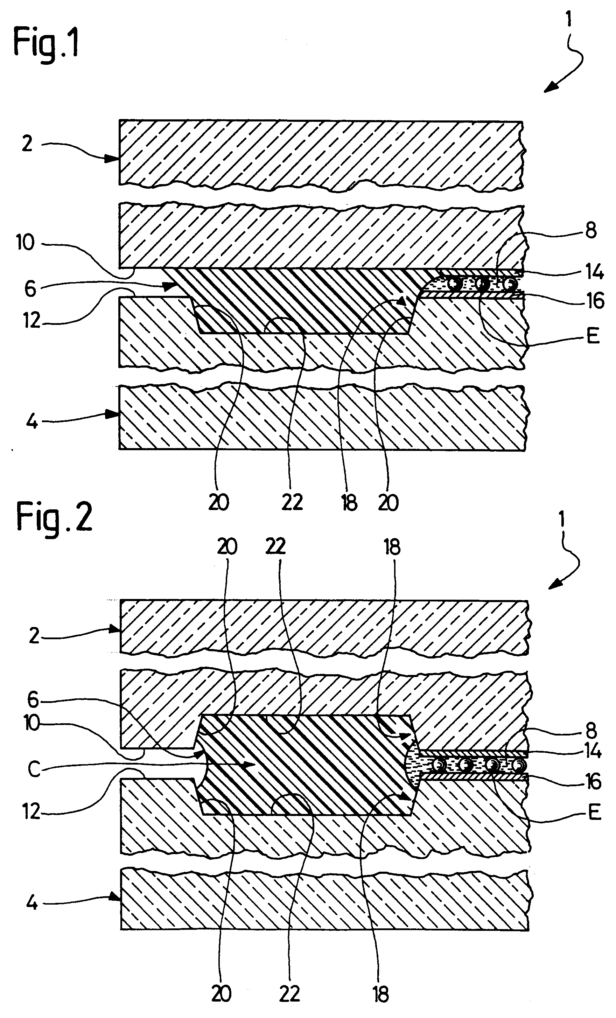

En se référant tout d'abord à la figure 1, on voit un premier mode de réalisation d'une cellule à cristaux liquides selon l'invention qui est désignée par la référence générale numérique 1.

La cellule 1, dont seule une partie périphérique est représentée en coupe au dessin, comprend de manière connue un substrat supérieur 2 et un substrat inférieur 4, les substrats 2 et 4 étant réalisés en un matériau flexible par exemple en matière plastique, tel qu'un polycarbonate.

Le substrat supérieur 2 et le substrat inférieur 4 sont réunis par l'intermédiaire d'un cadre de scellement 6, formé par exemple à l'aide d'une colle polymérisable. Le cadre de scellement dessine un contour fermé le long des bords des substrats 2 et 4 et délimite la zone active de la cellule 1. Le cadre de scellement 6 est lié de façon étanche aux substrats 2 et 4 et définit avec ces derniers un volume étanche dans lequel est emprisonné un film de cristaux liquides 8. Les substrats 2 et 4 portent respectivement sur leurs faces en regard 10, 12 des électrodes supérieure 14 et inférieure 16 ayant une configuration prédéterminée. Ces électrodes sont réalisées en matière conductrice, par exemple en matière conductrice transparente du type "ITO" (oxyde d'indium et d'étain). Les électrodes 14 et 16 sont reliées respectivement à des contacts extérieurs (non représentés) nécessaires au fonctionnement de la cellule d'une manière bien connue de l'homme de métier.

La cellule 1 comprend, en outre, des entretoises E ayant la forme de billes ou de fibres disposées entre les substrats dans la zone active de la cellule, ces dernières qui sont mises en place avant l'assemblage des substrats 2 et 4 déterminent l'écartement entre les faces en regard 10 et 12 des substrats.

On notera à ce propos que le dessin ne reflète pas l'épaisseur exacte des différents éléments de la cellule et que les épaisseurs sont fortement exagérées pour plus de clarté. Pour fixer les idées, la distances entre les faces 10 et 12 est de l'ordre de 5 à 10 µm, et l'épaisseur des substrats 2 et 4 est de l'ordre de 1 à 1,5 mm.

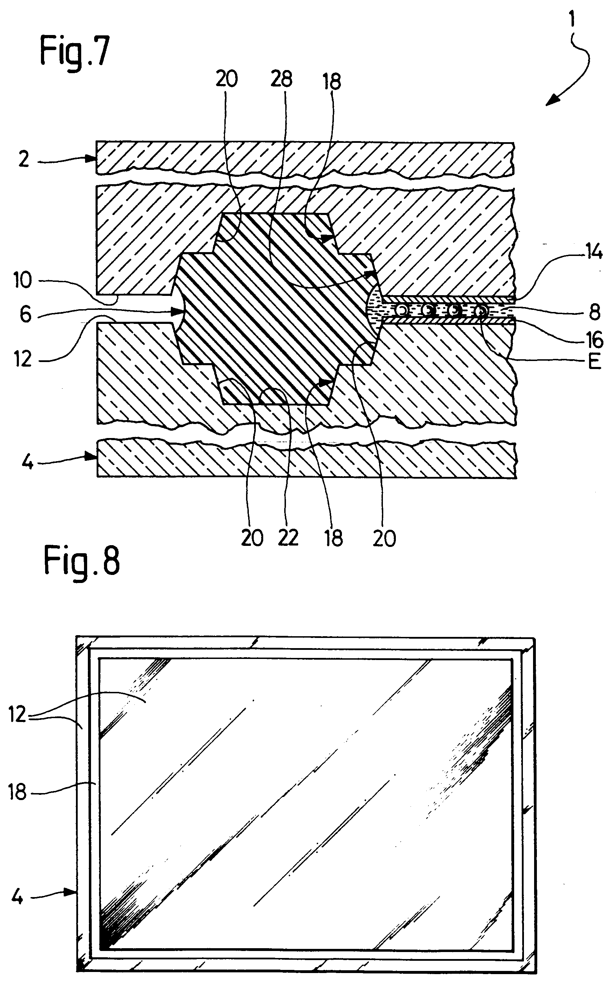

Selon le premier mode de réalisation de l'invention et en se référant aux figures 1 et 8, le substrat inférieur 4 comprend, gravée dans sa face 12, une rainure périphérique 18 continue dans laquelle pénètre le cadre de scellement 6 tandis que le substrat supérieur 2 présente une surface plane dans la zone en regard de la rainure 18.

La rainure 18 présente de préférence des parois latérales 20 en dépouille positive ou en d'autres termes qui s'évasent vers l'extérieur. L'évasement des parois latérales 20 permet une préorientation de l'écoulement de la colle lors de l'assemblage des substrats et limite l'effet de pincement qui tend à déplacer brusquement la colle sur les côtés de la rainure et notamment dans la zone active ou encore vers l'intérieur de la cellule lors de l'assemblage des substrats 2 et 4. Le profil du fond 22 de la rainure peut quant à lui être d'une forme quelconque.

On remarquera à ce propos que la matière qui forme le cadre de scellement ne remplit pas toute la rainure et ne déborde pas sur les côtés de celle-ci.

La largeur de cette rainure est de préférence sensiblement égale à celle des cadres de scellement des cellules de l'art antérieur mais pourrait, le cas échéant, être inférieure si l'on augmente de façon appropriée la profondeur de la rainure. A titre d'exemple la largeur de la rainure est comprise de préférence entre 0,5 et 1 mm et la profondeur de la rainure est comprise entre 0,15 et 0,2 mm.

En tout état de cause et selon une caractéristique de l'invention, la section transversale S du cadre de scellement est un multiple, de préférence un multiple entier, supérieur ou égal à 2 et de façon plus préférentielle compris entre 5 et 7, d'une aire A égale au produit de la largeur L du cadre de scellement par l'écartement E compris entre les substrats, l'épaisseur du cadre de scellement en n'importe quel point étant supérieure ou égale audit écartement.

Dans le cadre de l'exemple représenté à la figure 1, avec une cellule ayant un écartement entre les substrats de 5 µm, et une largeur du cadre de 500 µm, une profondeur de rainure P de l'ordre de 150 µm permet d'obtenir une section transversale S de 7'500 µm$^2$ qui correspond à trois fois l'aire $A = L \cdot E = 500 \cdot 5 = 2'500$ µm$^2$.

La présence de cette rainure permet donc d'augmenter la surface du cadre de scellement en contact avec les substrats et ainsi d'augmenter par là même l'adhérence de ces derniers au cadre. Cette rainure permet également d'augmenter de volume du cadre de scellement et ainsi d'augmenter la cohésion des substrats. Ces deux augmentations n'affectent pas la largeur du cadre de scellement.

Selon une caractéristique avantageuse de l'invention, les parois latérales 20 et de fond 22 de la rainure 18 sont traitées à l'aide d'un plasma à l'oxygène, à l'azote ou d'un mélange de tétrafluorure de carbone et d'oxygène pour augmenter leur mouillabilité et ainsi faciliter l'écoulement de la colle le long des surfaces des parois latérales et du fond lors de l'assemblage des substrats.

La rainure 18 peut être obtenue directement par injection lorsque l'on utilise des substrats réalisés en matière plastique ou encore par gravage classique lorsque l'on utilise des substrats en verre.

Aux figures 2 à 8 on a représenté d'autres variantes et modes de réalisation d'une cellule selon l'invention dans lesquels on a désigné les éléments identiques à ceux décrits en liaison avec la figure 1 par les mêmes références numériques.

En particulier la figure 2 montre une variante de la cellule illustrée à la figure 1 dans laquelle le substrat supérieur 2 comprend également une rainure 18 identique à celle ménagée dans le substrat inférieur 4, et ménagée sensiblement en regard de cette dernière. Ainsi, lorsque les substrats sont assemblés, les rainures 18 respectivement de chacun des substrats définissent un canal C dans lequel pénètre le cadre de scellement 6.

On notera que ce mode de réalisation offre de manière avantageuse une surface de contact deux fois plus importante des substrats 2 et 4 avec la colle qui forme le cadre de scellement 6 que dans le cas du premier mode de réalisation ce qui augmente bien entendu la résistance de l'assemblage des substrats.

A titre indicatif, l'assemblage des substrats 2 et 4 des modes de réalisation décrits ci-dessus peut être réalisé par le simple dépôt d'une quantité appropriée de colle dans la rainure 18 d'un ou des substrats 2 et 4 et par l'application classique d'un des substrats sur l'autre en s'assurant dans le cas de la variante décrite à la figure 2, que les rainures soient sensiblement en regard les espaceurs ayant été préalablement disposés sur un des substrats.

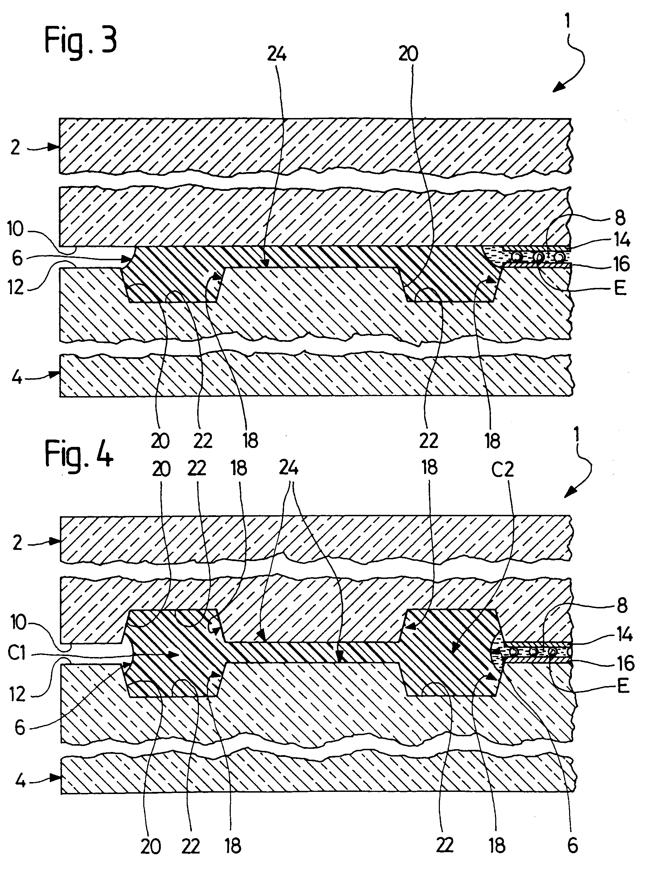

En se référant maintenant à la figure 3 on a représenté un deuxième mode de réalisation dans lequel le substrat supérieur est identique au substrat supérieur de la cellule représenté à la figure 1 et dans lequel le substrat inférieur 4 comprend deux rainures 18 périphériques continues ayant des contours sensiblement parallèles. Dans ce mode de réalisation, les rainures 18 sont séparées l'une de l'autre par une portion plane ou bande 24 de la face 12, cette bande 24 se trouvant sensiblement au même niveau que la face 12 du substrat 4. Comme cela ressort de la figure, le cadre de scellement 6 pénètre dans ce cas à la fois dans les rainures 18 et dans l'espace délimité entre la bande 24 et la partie de la face 12 du substrat supérieur qui se trouve en regard.

De préférence, et pour assurer un assemblage résistant des substrats, le cadre de scellement 6 s'étend de façon continue dans ces espaces et les remplit complètement.

On notera que de manière avantageuse, les rainures 18 et la bande 24 présentent sensiblement une largeur identique, et de préférence, la somme des largeurs respectives des rainures et de la bande est environ égale à la largeur des cadres de scellement des cellules de l'art antérieur.

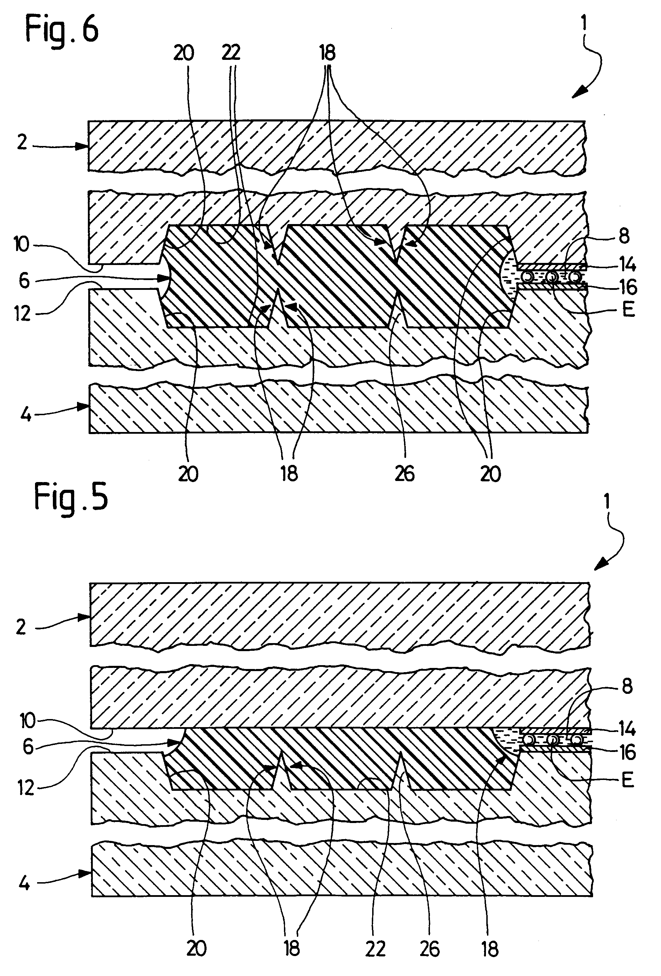

La figure 4 montre une variante de la cellule montrée à la figure 3 dans laquelle le substrat supérieur 2 est identique au substrat inférieur 4 et comprend donc deux rainures 18 ménagées respectivement sensiblement en regard 15 de celles du substrat inférieur 4. Ainsi, lorsque les substrats 2 et 4 sont assemblés, les paires de rainures 18 des substrats inférieur et supérieur définissent deux à deux des canaux Cl et C2 dans lesquels pénètrent le cadre de scellement 6.

Cette variante de réalisation permet d'augmenter davantage la surface de contact des substrats avec le cadre de scellement et donc la résistance de l'assemblage de ces derniers sans pour cela devoir augmenter la largeur du cadre de scellement 6.

Dans les modes de réalisation des figures 3 et 4, l'assemblage est réalisé de préférence en déposant la quantité appropriée de colle sur la bande 24 de l'un ou des deux substrats selon le cas et les substrats sont appliqués classiquement l'un l'autre en s'assurant dans le cas de la variante décrite à la figure 4, que les rainures soient sensiblement en regard l'une de l'autre, les espaceurs ayant bien entendu été préalablement disposés sur un des substrats. Une fois les substrats 2 et 4 assemblés, la colle remplit l'ensemble des volumes délimités par les rainures 18.

A la figure 5 est représentée une cellule selon un troisième mode de réalisation de l'invention dans lequel le substrat supérieur 2 est identique au substrat supérieur 2 représenté à la figure 1 et dans lequel le substrat inférieur 4 comprend trois rainures 18 périphériques continues contiguës ayant des contours respectifs sensiblement parallèles. Ces rainures 18 présentent toutes la même section droite et sont donc séparées les unes des autres par des nervures 26 à section triangulaire.

La figure 6 montre une variante du mode de réalisation de la figure 5 dans laquelle le substrat supérieur 2 est identique au substrat inférieur 4, les rainures 18 du substrat supérieur 2 étant ménagées sensiblement en regard de celles du substrat inférieur 4.

L'assemblage des substrats 2 et 4 des modes de réalisation des figures 5 et 6 est identique à celui décrit en liaison avec les figures 3 et 4 à la différence que la colle est déposée dans la ou les rainures centrales.

Il va de soi que pour obtenir un assemblage des substrats ayant une résistance optimale le volume de colle formant le cadre de scellement 6 doit être tel qu'il remplisse la totalité du volume défini par les rainures 18 sans toutefois déborder dans la surface active de la cellule.

A la figure 7 est représenté un quatrième mode de réalisation de l'invention dans lequel les deux substrats 2 et 4 comprennent chacun deux rainures 18, 28 périphériques continues superposées la rainure 28, la moins profonde ayant une largeur supérieure à celle de la rainure la plus profonde 18, les rainures du substrat 2 étant disposées en regard des rainures 18, 28 de l'autre substrat 4.

Comme dans les autre modes de réalisation, le cadre de scellement 6 s'étend dans ces rainures 18, 28. De façon avantageuse, le volume supplémentaire créé par la rainure 28 constitue un volume d'expansion dans lequel, le cas échéant le surplus de colle formant le cadre de scellement 6 peut s'écouler lors de l'assemblage des substrats 2 et 4. Cela évite ainsi que la zone active soit polluée par la colle dans le cas du dépôt d'un volume de colle trop important dans la rainure 18.

On notera, de manière avantageuse, que les modes de réalisation représentés aux figures 2 à 7 offrent une grande surface de contact des substrats 2 et 4 avec la colle qui forme le cadre de scellement 6.

De manière idéale, et pour tous les modes et/ou variantes de réalisation qui viennent d'être décrits, le volume total de colle déposé dans l'une et/ou l'autre des rainures 18 est déterminé de sorte qu'une fois les substrats assemblés le volume des rainures 18 soit totalement rempli sans toutefois que la colle ne déborde dans la zone active de la cellule 1.

## Revendications

1.　Cellule électrique du type comprenant un premier et un deuxième substrats parallèles flexibles, écartés l'un de l'autre d'un écartement déterminé, portant des électrodes sur leurs faces en regard, ces substrats enfermant entre eux une couche de matière sensible qui peut changer de propriété physique, notamment optique, sous l'effet d'une tension appliquée aux électrodes, ou changer de propriété électrique sous l'effet d'une contrainte ou d'un rayonnement traversant l'un de celui-ci, ladite matière sensible étant protégée du contact de l'atmosphère par un cadre de scellement reliant entre elles, de façon étanche les parties périphériques desdits substrats, ledit cadre ayant une largeur dans le plan des substrats, caractérisée en ce qu'au moins le premier substrat comprend sur sa face en regard du deuxième substrat au moins une première rainure périphérique continue dans laquelle pénètre au moins une partie dudit cadre de scellement, la section transversale du cadre de scellement étant un multiple d'une aire égale au produit de ladite largeur par ledit écartement, l'épaisseur du cadre de scellement en n'importe quel point étant supérieure ou égale audit écartement.

2. Cellule électrique selon la revendication 1, caractérisée en ce que ledit multiple est supérieur ou égal à 2, et de préférence compris entre 5 et 7.

3. Cellule électrique selon la revendication 1, caractérisée en ce qu'elle comprend dans la zone intérieure délimitée par le cadre de scellement et entre les substrats des entretoises déterminants l'écartement des faces en regard des substrats.

4. Cellule électrique selon l'une des revendications 1 à 3, caractérisée en ce que le premier substrat comprend au moins une deuxième rainure périphérique continue ayant un contour parallèle à celui de la première rainure, ladite deuxième rainure étant ménagée au voisinage de ladite première rainure et en ce qu'une partie dudit cadre de scellement pénètre dans ladite deuxième rainure.

5. Cellule électrique selon l'une des revendications 1 à 3, caractérisée en ce que le premier substrat comprend une deuxième rainure périphérique continue ayant un contour parallèle à celui de la première rainure, ladite deuxième rainure ayant une largeur supérieure à celle de la première rainure et étant superposée à ladite première rainure et en ce qu'une partie dudit cadre de scellement 35 pénètre dans ladite deuxième rainure.

6. Cellule électrique selon l'une des revendications 1 à 3, caractérisée en ce que le deuxième substrat comprend une rainure ménagée sensiblement en regard de ladite première rainure, et dans laquelle pénètre également au moins une partie dudit cadre de scellement.

7. Cellule électrique selon la revendication 4, caractérisée en ce que le deuxième substrat comprend au moins deux rainures ménagées respectivement sensiblement en regard desdites au moins première et deuxième rainures et dans lesquelles pénètre au moins une partie dudit cadre scellement.

8. Cellule électrique selon la revendication 5, caractérisée en ce que le deuxième substrat comprend deux rainures périphériques continues superposées, une des rainures ayant une largeur supérieure à celle de l'autre, ces deux rainures s'étendant en regard desdites première et deuxième rainures et en ce qu'une partie dudit cadre de scellement pénètre dans les deux rainures.

9. Cellule électrique selon l'une quelconque des revendications précédentes, caractérisée en ce que la ou les rainures comprennent des parois latérales en dépouille positive.

10. Cellule électrique selon l'une quelconque des revendications précédentes, caractérisée en ce que les parois intérieures des rainures sont traitées à l'aide d'un plasma à l'oxygène, à l'azote ou au $CF_4$ $O_2$.

11. Cellule électrique selon l'une quelconque des revendications précédentes, caractérisée en ce que la profondeur des rainures est comprise entre 0,15 et 0,2 mm.

12. Cellule selon l'une quelconque des revendications précédentes, caractérisée en ce que l'écartement entre les faces en regard des substrats est compris entre 5 et 12 µm.

13. Cellule selon l'une quelconque des revendications précédentes, caractérisée en ce que les substrats ont une épaisseur comprise entre 0,8 et 2 mm et de préférence entre 1 et 1,5 mm.

14. Cellule électrique selon l'une quelconque des revendications précédentes, caractérisée en ce que la largeur du cadre de scellement est comprise entre 0,5 et 10 mm.

Fig.1

Fig.2

EP 0 733 930 A2

Fig. 3

Fig. 4

8

Fig. 6

Fig. 5

Fig.7

Fig.8